# EUROPÄISCHE PATENTANMELDUNG

(11) **EP 2 604 399 A2**
(43) Veröffentlichungstag der Anmeldung: **19.06.2013**
(21) Anmeldenummer: 12008042.9
(22) Anmeldetag: 30.11.2012
(51) Int. Cl.: B26D 7/27, B26D 5/02, B26D 5/04, B26D 5/08, B26D 5/12, B26D 1/157, B25J 19/00

(54) **Vorrichtung zur Verarbeitung von Lebensmittelprodukten**

(30) Priorität: 13.12.2011 DE 102011121017
(71) Anmelder: Weber Maschinenbau GmbH Breidenbach, 35236 Breidenbach (DE)
(72) Erfinder: Rother, Ingo, 35236 Breidenbach (DE)
(74) Vertreter: Grünecker, Kinkeldey, Stockmair & Schwanhäusser

(57) **Zusammenfassung**

Die Erfindung betrifft eine Vorrichtung (1) zum Verarbeiten und/oder zum Transport von Lebensmittelprodukten (3), insbesondere von Fleisch- und Wurstwaren, mit mindestens einer Baueinheit (7), und mindestens einer Drucküberwachungseinrichtung (15). Die Erfindung zeichnet sich dadurch aus, dass die mindestens eine Baueinheit (7) ein druckhaltend abgedichtetes Gehäuse (10) aufweist, wobei in dem Gehäuse (10) ein Überdruck gegenüber der Gehäuseumgebung erzeugbar und mittels der mindestens einen Drucküberwachungseinrichtung (15) überwachbar ist.

## Beschreibung

Die vorliegende Erfindung bezieht sich auf eine Vorrichtung gemäß dem Oberbegriff des Anspruchs 1 und auf ein Verfahren gemäß dem Oberbegriff des Anspruchs 11.

Aus der Praxis sind beispielsweise Schneidemaschinen bekannt, mit denen Lebensmittel geschnitten, gewogen, umgesetzt oder anderweitig verarbeitet oder transportiert werden. Solche Maschinen verfügen je nach Bauart über mindestens eine Baueinheit, die die Maschine antreibt und/oder steuert.

Weiter ist bekannt, dass lebensmittelverarbeitende Maschinen besonderen Hygieneanforderungen gerecht werden müssen. So soll u.a. ausgeschlossen werden, dass sich Verunreinigungen oder Keime an Maschinenkomponenten, insbesondere an den lebensmittelnahen Maschinenteilen, festsetzen und die zur verarbeitenden Lebensmittel kontaminieren. Um diese Verunreinigungen zu vermeiden, werden die Maschinen regelmäßig mit Wasser und zugesetzten Reinigungsmitteln gespült bzw. von außen abgewaschen.

Zwar werden diese Reinigungsmaßnahmen an den Maschinen regelmäßig und innerhalb kurzer Zeitabstände durchgeführt, um eventuell festsitzende Verunreinigungen zu beseitigen. Dennoch wäre es wünschenswert, wenn das Festsetzen oder gar das Eindringen von Verunreinigungen an lebensmittelnahen Maschinenteilen vermieden werden oder zumindest frühzeitig erkannt werden könnte, um die Maschinen bedarfsgerecht zu reinigen.

Beispielsweise schlägt die DE 60 2004 005 339 eine Verpackungsmaschine vor, bei der weite Teile der Maschine von einer Umfassungseinheit umschlossen werden, um die lebensmittelnahen Bereiche der Maschine vor Verunreinigungen zu schützen. Innerhalb dieser Umfassungseinheit werden die zu verarbeitenden Produkte transportiert, verarbeitet und verpackt. Das Innere dieser Umfassungseinheit wird gegenüber der Maschinenumgebung unter Überdruck gesetzt, damit keine Verunreinigungen in das Innere der Umfassung gelangen. Nachteilig daran ist, dass die Umfassungseinheit aufwändig um die Maschine angeordnet und an deren Bauform angepasst werden muss. Außerdem müssen für das Zu- und Abführen der Lebensmittelprodukte Öffnungen in der Umfassungseinheit vorgesehen werden. Dies erfordert jedoch eine permanente, energieaufwändige Überdruckerzeugung bzw. -erhaltung innerhalb der Umfassungseinheit. Weiter ist nachteilig, dass die Lebensmittelprodukte selbst einem permanenten Luftstrom potentiell kontaminierter Luft ausgesetzt sind. Deshalb wird ein aufwändiges Reinluftsystem zur Luftaufbereitung benötigt.

Die Aufgabe der Erfindung ist es, eine konstruktiv möglichst einfache und energieeffiziente Vorrichtung zum Verarbeiten von Lebensmitteln zu schaffen, bei der das Eindringen von Verunreinigungen in die Maschinenkomponenten reduziert ist.

Diese Aufgabe wird gelöst durch eine Vorrichtung mit den Merkmalen des Anspruchs 1 bzw. durch ein Verfahren zum Betrieb einer solchen Vorrichtung mit den Merkmalen des Anspruchs 11. Vorteilhafte Weiterbildungen der Erfindung sind in den Unteransprüchen angegeben.

Die erfindungsgemäße Vorrichtung zeichnet sich dadurch aus, dass mindestens eine der Baueinheiten der Vorrichtung ein druckhaltend abgedichtetes Gehäuse aufweist. Die Baueinheit kann jeder Hohlraum der Vorrichtung, beispielsweise ein Schaltschrank, ein Maschinengehäuse, eine Rohrleitung oder ein Rahmenprofil sein. Dieses Gehäuse der mindestens einen Baueinheit ist mit einem gegenüber der Gehäuseumgebung herrschenden Überdruck beaufschlagbar. Weiter ist dieser Überdruck mit einer Drucküberwachungseinrichtung überwachbar. Besonders vorteilhaft daran ist, dass aufgrund des Überdrucks in dem Gehäuse keine Verschmutzungen, Reinigungsmittel oder Keime in das Gehäuse eindringen können. Weiter ist es vorteilhaft, dass der Überdruck in dem Gehäuse mittels der Drucküberwachungseinrichtung überwachbar ist, und somit Undichtigkeiten des Gehäuses erkannt werden können, indem ein signifikanter Überdruckabfall innerhalb des Gehäuses festgestellt wird. Darüber hinaus ist auch eine Leckageüberwachung innerhalb des Gehäuses der Baueinheit möglich, da bei einem gemessenen Abfall des überwachten Überdrucks auf eine Undichtigkeit einer Gehäusedichtung bzw. einer Gehäusedurchführung der Baueinheit geschlossen werden kann. Denn durch eine Leckage des Gehäuses sinkt der Druck innerhalb des Gehäuses ab.

In einer besonders vorteilhaften Ausführungsvariante der Erfindung ist die Baueinheit der Vorrichtung eine Antriebseinheit für eine Schneideeinrichtung der lebensmittelverarbeitenden Vorrichtung. Die Schneideeinrichtung kommt direkt mit den Lebensmitteln in Kontakt, so dass die zugehörige Antriebseinheit entsprechend nahe an den Lebensmitteln angeordnet ist. Ein druckhaltend abgedichtetes Gehäuse für diese Antriebseinheit und die Beaufschlagung mit einem Überdruck ist deshalb besonders zweckmäßig. Unerwünschte Undichtigkeiten der Antriebseinheit und damit potentielle Eindring- und Anlagerungsstellen für Verunreinigungen können durch die fortlaufende Überwachung des Überdrucks zeitnah festgestellt werden.

Es kann zweckmäßig sein, wenn der Überdruck in dem Gehäuse in festlegbaren Intervallen erzeugbar und/oder erneuerbar ist. Denn aufgrund einer eventuellen Luftdurchlässigkeit des Gehäuses kann der Überdruck innerhalb des Gehäuses mit der Zeit abfallen, so dass sich der Druck in dem Gehäuse mit der Zeit an den Umgebungsdruck anpasst. Eine festlegbare Erneuerung des Überdrucks ermöglicht es, den Überdruck an die Dichtigkeit des Gehäuses anzupassen. Vorteilhaft daran ist der gegenüber einer permanenten Druckerzeugung reduzierte Energieverbrauch, da der Druck nur bei Bedarf, jedoch nicht permanent erzeugt wird. Weiter kann die Überdruckerzeugung je nach Gehäusebauart variiert werden. Es kann auch vorteilhaft sein, wenn der Überdruck durch einen kontinuierlichen Zustrom eines Gases oder Gasgemisches aufrecht erhalten wird. In diesem Fall kann eine Leckagerate eingeplant sein und die Drucküberwachung unter Berücksichtigung derselben erfolgen. Das dem Gehäuse zugeführte Medium kann ein geeignetes Gas, Gasgemisch oder Druckluft sein.

Es hat sich weiter als zweckmäßig erwiesen, wenn die Drucküberwachungseinrichtung dazu konfiguriert ist, die Druckverhältnisse bzw. den Überdruck in dem Gehäuse der mindestens einen Baueinheit anhand von festlegbaren Parametern zu beurteilen. Als Parameter für die Beurteilung der Druckverhältnisse kommen der gemessene Druck, die Leckrate des Gehäuses und der Zeitintervall der Druckerzeugung, d.h. die Zeitabstände zwischen der Druckerzeugung, in Betracht. Je nach Gehäuseausführung und -abdichtung können die Parameter in die Drucküberwachungseinrichtung appliziert werden.

Eine vorteilhafte Ausführungsvariante der Erfindung sieht vor, dass der Überdruck in dem Gehäuse der mindestens einen Baueinheit zu festlegbaren Intervallen überwachbar ist. Denn so kann die Drucküberwachung je nach Anforderung von Zeitintervallen im Millisekunden-Bereich bis hin zu Stundenabständen variiert werden. Dies kann vorteilhaft sein, um beispielsweise Rechenkapazitäten einer Steuereinheit einzusparen oder die Drucküberwachung sinnvoll in ein bestehendes Steuerprogramm einer Maschinensteuerung einzubinden.

Zweckmäßig ist es, wenn die Drucküberwachungseinrichtung von einer Steuereinheit steuerbar ist. So kann die für die gesamte Vorrichtung vorgesehene Steuerung zusätzlich die Drucküberwachungseinrichtung steuern.

Um den Überdruck in der mindestens einen Baueinheit zu erzeugen, und/oder zu erneuern, ist es vorteilhaft, wenn die Vorrichtung eine Pumpe umfasst. Vorteilhafterweise ist für jedes Gehäuse der Vorrichtung eine gemeinsame Pumpe vorgesehen, um den Bauraumbedarf innerhalb oder an der Vorrichtung zu begrenzen.

Vorteilhafterweise sind die Drucküberwachungseinrichtung und/oder die Pumpe über eine in die Vorrichtung integrierte Steuerung steuerbar und/oder regelbar. Damit kann die Pumpe in Abhängigkeit der Messergebnisse der Drucküberwachungseinrichtung gezielt und an die jeweilige Situation angepasst aktiviert bzw. deaktiviert werden. Die Vorrichtung lässt sich so besonders energieeffizient betreiben.

Um Undichtigkeiten des Gehäuses an das Bedienpersonal oder eine Steuerung zu signalisieren ist es vorteilhaft, wenn die Drucküberwachungsvorrichtung derart mit einer Signalisierungseinrichtung verbunden ist, dass die Signalisierungseinrichtung von der Drucküberwachungsvorrichtung aktivierbar und deaktivierbar ist.

Zweckmäßigerweise umfasst die Vorrichtung eine Vielzahl von Baueinheiten, die jeweils ein druckhaltend abgedichtetes Gehäuse aufweisen, wobei in jedem der Gehäuse ein Überdruck gegenüber der Gehäuseumgebung erzeugbar und überwachbar ist.

Das erfindungsgemäße Verfahren zum Betrieb der Vorrichtung zeichnet sich dadurch aus, dass durch den im druckhaltend abgedichteten Gehäuse erzeugten Überdruck das Eindringen von Verschmutzungen, Reinigungsmitteln oder Keimen in das Gehäuse verhindert wird, und dass bei einem durch die Drucküberwachungseinrichtung festgestellten Druckabfall in dem Gehäuse, eine Ersatzmaßnahme eingeleitet wird. Damit wird die Hygiene bei der Lebensmittelverarbeitung verbessert, da im ordnungsgemäßen Betrieb der Vorrichtung keine Verschmutzungen, Reinigungsmittel oder Keime in das Gehäuse eindringen. Da bei einem durch die Drucküberwachungseinrichtung festgestellten, signifikanten Druckabfall eine Ersatzmaßnahme eingeleitet wird, wird auch der Betrieb im Fehlerfall verbessert. Als Ersatzmaßnahmen kommen die Signalisierung des Druckabfalls, die Suche der für den Druckabfall verantwortlichen Undichtigkeit und die Behebung der Undichtigkeit in Betracht.

Vorteilhaft ist es, wenn die Erzeugung des Überdrucks zu festlegbaren Intervallen erfolgt. So kann der Überdruck beispielsweise zum Beginn eines Arbeitstages auch einmalig erzeugt und anschließend regelmäßig überwacht werden. Da der Überdruck durch das Gehäuse gehalten wird, baut sich dieser über die Zeit nur geringfügig ab. Somit ist keine permanente Überdruckerzeugung notwendig, wodurch die Energieeffizienz der Vorrichtung gesteigert wird. Darüber hinaus können die Zeitintervalle an die Dichtigkeit des jeweiligen Gehäuses angepasst werden. So wird der Überdruck bei einem weniger druckhaltend abgedichteten Gehäuse häufiger erneuert und bei einem annähernd luftdicht abgedichteten Gehäuse seltener.

Besonders vorteilhaft ist es, wenn die Druckverhältnisse in dem überwachten Gehäuse anhand von festlegbaren Parametern beurteilt werden. Die dafür in Betracht kommenden festlegbaren Parameter können beispielsweise der gemessene Druck, die Leckrate des Gehäuses, die Häufigkeit der Druckerneuerung oder weitere geeignete Parameter sein.

Zweckmäßig ist es, wenn die Erzeugung des Überdrucks in dem Gehäuse durch eine Pumpe erfolgt.

Eine vorteilhafte Variante des erfindungsgemäßen Verfahrens sieht vor, dass die Überdruckerzeugung und die Überdrucküberwachung von einer gemeinsamen bzw. einzigen Steuereinheit gesteuert bzw. geregelt werden. Denn so liegen sämtliche Messwerte und Parameter in einer gemeinsamen Steuereinheit vor, so dass eine besonders effiziente Steuerung bzw. Regelung der Vorrichtung möglich ist.

Im Folgenden werden vorteilhafte Ausführungsbeispiele der Erfindung anhand einer Zeichnung näher erläutert. Im Einzelnen zeigt:

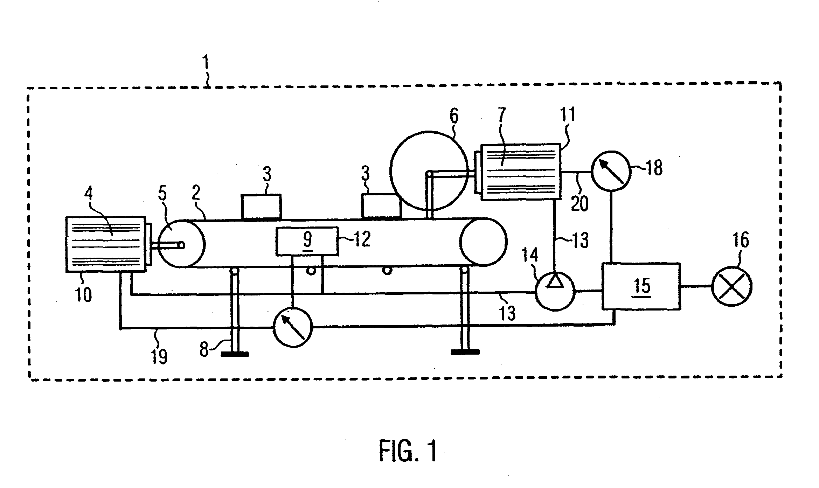

- Figur 1: eine schematische Seitenansicht einer erfindungsgemäßen Vorrichtung in Form einer Schneidemaschine.

Gleiche Komponenten sind in den Figuren durchgängig mit gleichen Bezugszeichen versehen.
Figur 1 zeigt eine erfindungsgemäße Vorrichtung 1 in schematischer Seitenansicht. In diesem Ausführungsbeispiel handelt es sich um eine Schneidemaschine zum Aufschneiden von Wurst- und Fleischwaren oder Käse in Scheiben. Diese Schneidemaschinen sind auch als so genannte Slicer bekannt.

Die Schneidemaschine 1 verfügt über ein Transportband 2, zur Beförderung von Lebensmittelprodukten 3. Das Transportband 2 ist in diesem Beispiel als Endlosförderer ausgeführt, für dessen Antrieb eine Antriebseinheit 4 vorgesehen ist. Die Antriebseinheit 4 ist ein Elektromotor, der mit einer Antriebsrolle 5 verbunden ist, wobei die Antriebsrolle 5 dazu eingerichtet ist, das Transportband 2 in Bewegung zu versetzen.

In einer Transportrichtung des Transportbandes 2 stromabwärts verfügt die Schneidemaschine 1 über eine Schneidevorrichtung 6, die als rotierendes Rundmesser ausgeführt ist. Zum Antrieb der Schneidevorrichtung 6 ist eine damit verbundene, weitere Antriebseinheit 7 verbunden. Die Antriebseinheit 7 ist ein Elektromotor, der die Schneidevorrichtung in eine Rotationsbewegung versetzt.

Die Schneidemaschine 1 sowie deren Anbauteile werden von einem Maschinengestell 8 getragen.

Zur Steuerung der Schneidemaschine 1 und insbesondere der Antriebseinheiten 4, 7 ist eine in die Schneidemaschine 1 integrierte Steuerung 9 vorgesehen. Die Steuerung 9 ist mit Steuer- und Prüfprogrammen programmierbar und weiter dazu eingerichtet, bidirektional kommunizierend mit weiteren elektrischen und elektronischen Komponenten der Schneidemaschine 1 verbunden zu werden.

Die Antriebseinheiten 4, 7 und die Steuerung 9 weisen jeweils ein luftdruckhaltendes Gehäuse 10, 11, 12 auf. Die für das Abdichten der Gehäuse verwendeten Dichtungen können aus einem beliebigen, geeigneten Material gefertigt sein. Vorzugsweise weisen die Dichtungen eine gute Resistenz gegen chemische Reinigungsmittel auf und sind ferner für den Lebensmittelbereich zugelassen. An jedem der Gehäuse 10, 11, 12 ist eine luftführende Druckleitung 13 auf geeignete Weise angeflanscht. Die Druckleitung 13 ist mit einer in die Schneidemaschine 1 integrierten Pumpe 14 verbunden, die vorzugsweise elektrisch antreibbar ist. Die Pumpe 14 ist über eine angeschlossene Überwachungseinrichtung 15 regel- und/oder steuerbar. Die Überwachungseinrichtung 15 ist ein geeigneter und programmierbarer Mikrocontroller. Mit der Überwachungseinrichtung 15 ist eine Signalisierungseinrichtung 16 verbunden, die beispielsweise als Monitor oder Signallampe ausgeführt ist.

Mit den Gehäusen 11, 12, 13 sind ein erster und ein zweiter Druckmesser 17, 18 über angeflanschte Druckleitungen 19, 20 verbunden. Die Druckmesser 17, 18 sind vorzugsweise Differenzdruckmesser und weiter dazu eingerichtet, mit der Überwachungseinrichtung 15 zusammenzuwirken.

Die generelle Betriebsweise der Schneidemaschine wird im Folgenden kurz beschrieben.

Der Schneidevorrichtung 6 werden über das Transportband 2 die aufzuschneidenden Lebensmittelprodukte 3 zugeführt. Dabei wird das Transportband 2 von der Antriebseinheit 4 und die Schneidevorrichtung 6 von der Antriebseinheit 7 angetrieben. Das Zusammenwirken der Komponenten, insbesondere taktweise, wird von der Steuerung 9 der Schneidemaschine 1 gesteuert.

Zwar wird die gesamte Schneidemaschine 1 mitsamt den Gehäusen 10, 11, 12 regelmäßig und gründlich gereinigt, dennoch könnten sich Verunreinigungen und Keime an der Schneidemaschine 1 anlagern oder sogar in Teile davon eindringen. Besonders an Ritzen oder Vorsprüngen der Gehäuse 10, 11, 12 können sich Verschmutzungen anlagern oder in die Gehäuse 10, 11, 12 eindringen.

Um dies zu vermeiden, erzeugt die Pumpe 14 einen Luftdruck, der die Gehäuse 10, 11, 12 mit einem Druck beaufschlagt, der gegenüber den Gehäuseumgebungen ein Überdruck ist. Der Überdruck in den Gehäusen 10, 11, 12 verhindert wirkungsvoll das Eindringen von Verunreinigungen oder Keimen, da er jeweils ein Druckgefälle in Richtung von der Gehäuseinnenseite zur Gehäuseaußenseite bewirkt. Das Eindringen von Verunreinigungen wird durch dieses Druckgefälle an den Gehäusen 10, 11, 12 verhindert.

In diesem Ausführungsbeispiel sind die Gehäuse 10, 11, 12 so druckhaltend abgedichtet, dass die Pumpe 14 einmalig zu Beginn eines Arbeitstages die Gehäuse mit einem Überdruck beaufschlagt und die Pumpe 14 während des weiteren ordnungsgemäßen Betriebs der Schneidemaschine 1 deaktiviert wird. Während des Verarbeitungsbetriebs der Schneidemaschine 1 wird über den Arbeitstag der Überdruck in den Gehäusen 10, 11, 12 mittels der Druckmesser 17, 18 in festlegbaren Intervallen überwacht und an die Überwachungseinrichtung 15 übermittelt. Sollte der Überdruck in den Gehäusen 10, 11, 12 nun ungewöhnlich schnell abfallen, wird dies von der Überwachungseinrichtung 15 festgestellt und dem Bedienungspersonal über die Signalisierungseinrichtung 16 mitgeteilt. Ein ungewöhnlich schnell abfallender Überdruck bedeutet, dass sich der tatsächlich gemessene Druck signifikant vom applizierten oder von der Drucküberwachungseinrichtung 15 berechneten Solldruck unterscheidet. Sollte der überwachte Druck jedoch ansteigen, obwohl kein Druck erzeugt wird, erkennt die Überwachungseinrichtung 15 eine Leckage innerhalb der Gehäuse 10, 11, 12. Diese Leckage kann beispielsweise an einer Hydraulik- oder Pneumatikleitung vorliegen und Folge des damit verbundenen Volumenanstiegs sein.

Die Messintervalle, d.h. die zeitlichen Abstände zwischen den Messungen, der Druckmesser 17, 18 und der Überwachungseinrichtung 15 werden dabei vorzugsweise so gewählt, dass eine zeitnahe Detektion einer Undichtigkeit der Gehäuse 10, 11, 12 festgestellt werden kann. Die Zeitabstände zwischen den Messungen können dabei zwischen 10 Millisekunden und mehreren Stunden liegen, vorzugsweise jedoch bei etwa 500 ms.

Die Bewertung beziehungsweise Beurteilung der Druckverhältnisse innerhalb der Gehäuse 10, 11, 12 erfolgt anhand festlegbarer Parameter durch die Überwachungseinrichtung 15. Die dafür berücksichtigten Parameter sind die von den Druckmessern 17, 18 ermittelten relativen Drücke, die Zeitabstände zwischen den Druckmessungen, und der daraus bestimmte zeitliche Druckabfall. Anhand von Kennfeldern oder Kennlinien, die in die Überwachungseinrichtung 15 oder die Steuerung 9, zum Beispiel anhand von Erfahrungswerten, appliziert werden, können die Druckverhältnisse berechnet bzw. beurteilt werden.

In dem Fall, dass die Überwachungseinrichtung 15 einen ungewöhnlichen schnellen Druckabfall innerhalb der Gehäuse 10; 11, 12 feststellt, wird die Signalisierungseinrichtung 16 aktiviert beziehungsweise eine Lecksuche und Leckbehebung iniziiert. Die Lecksuche kann manuell oder automatisch mit einem Diagnose- bzw. Prüfprogramm erfolgen. Stellt die Überwachungseinrichtung 15, trotz deaktivierter Pumpe 14, einen Druckanstieg innerhalb der Gehäuse 10, 11, 12 fest, so wird eine Leckage, beispielsweise einer Hydraulik- oder Pneumatikleitung, innerhalb der Gehäuse 10, 11, 12 erkannt.

Im Folgenden werden weitere vorteilhafte Ausführungsbeispiele der Erfindung erläutert.

Ausgehend von dem dargestellten Ausführungsbeispiel kann die erfindungsgemäße Vorrichtung 1 in vielfacher Weise abgewandelt werden. Beispielsweise ist es denkbar, dass die Vorrichtung 1 ein Roboter zur Lebensmittelverarbeitung, ein sogenannter Food Robot ist. Dabei könnte jedes beliebige Gehäuse, vor allem aber die Elektrogehäuse, mit einem

Überdruck gegenüber der jeweiligen Gehäuseumgebung versehen und dieser überwacht werden.

In einer weiteren Ausführungsvariante kann die Überdrucküberwachung von der integrierten Steuerung 9 der Vorrichtung 1 durchgeführt werden, so dass keine separate Überwachungseinrichtung 15 notwendig ist. Die Steuerung 9 ist für diesen Zweck mit einem Prüfprogramm programmierbar und weist geeignete Anschlüsse zum Anschluss der Druckmesser 17, 18 sowie eine Signalverarbeitungseinrichtung für die Druckmesswerte auf.

Weiterhin ist denkbar, dass die Gehäuse 10, 11, 12 nur schwach druckhaltend ausgebildet sind, so dass die Pumpe 14 den Überdruck innerhalb der Gehäuse 10, 11, 12 in festlegbaren Intervallen, mit kurzen Zeitenabständen, erzeugt. Die jeweilige Leckrate der Gehäuse 10, 11, 12 ist durch einfache Tests als Erfahrungswert bestimmbar und in dem Prüfprogramm der Steuerung 9 beziehungsweise der Drucküberwachungseinrichtung 15 berücksichtigbar.

Ferner könnte statt der in die Vorrichtung 1 integrierten Pumpe 14 eine zentrale Druckluftleitung in dem Betriebsraum der Vorrichtung 1 vorgesehen werden, um die Druckluft für die Überdruckerzeugung bereitzustellen.

Es wäre auch denkbar, ein Reinluftsystem für die Überdruckerzeugung vorzusehen.

Eine weitere Variante der Erfindung sieht vor, dass die Gehäuse 10, 11, 12 auch unter Überdruck gesetzt werden, wenn die Vorrichtung 1 außer Betrieb ist, um auch bei Nichtbetrieb das Eindringen von Verunreinigungen in die Gehäuse 10, 11, 12 zu vermeiden.

Weiter wäre es denkbar, dass die gesamte Vorrichtung 1 druckhaltend ummantelt und mit einem Überdruck innerhalb der Ummantelung beaufschlagt wird. Dies ist während der Betriebspausen der Vorrichtung 1 vorgesehen, um nach deren Reinigung das Wiederanlagern von Verunreinigungen bis zur erneuten Inbetriebnahme der Vorrichtung 1 zu unterbinden.

## Patentansprüche

1. Vorrichtung (1) zum Verarbeiten und/oder zum Transport von Lebensmittelprodukten (3), insbesondere von Fleisch- und Wurstwaren, umfassend:
mindestens eine Baueinheit (7),
mindestens eine Drucküberwachungseinrichtung (15),
**dadurch gekennzeichnet,**
**dass** die mindestens eine Baueinheit (7) ein druckhaltend abgedichtetes Gehäuse (11) aufweist, und dass in dem Gehäuse (11) der mindestens einen Baueinheit (7) ein Überdruck gegenüber der Gehäuseumgebung erzeugbar und mittels der mindestens einen Drucküberwachungseinrichtung (15) überwachbar ist.

2. Vorrichtung nach Anspruch 1, **dadurch gekennzeichnet, dass** die Baueinheit (7) eine Antriebseinheit für eine Schneideeinrichtung (6) der Vorrichtung (1) ist.

3. Vorrichtung nach Anspruch 1 oder 2, **dadurch gekennzeichnet, dass** der Überdruck in dem Gehäuse (11) der mindestens einen Baueinheit (7) in festlegbaren Zeitintervallen erzeugbar und/oder erneuerbar ist.

4. Vorrichtung nach einem der vorangehenden Ansprüche, **dadurch gekennzeichnet, dass** die Drucküberwachungseinrichtung (15) dazu konfiguriert ist, die Druckverhältnisse in der mindestens einen Baueinheit (7) anhand von festlegbaren Parametern zu beurteilen.

5. Vorrichtung nach einem der vorangehenden Ansprüche, **dadurch gekennzeichnet, dass** der Überdruck in dem Gehäuse (11) der mindestens einen Baueinheit (7) durch die Drucküberwachungseinrichtung (15) zu festlegbaren Zeitintervallen überwachbar ist.

6. Vorrichtung nach einem der vorangehenden Ansprüche, **dadurch gekennzeichnet, dass** die Drucküberwachungseinrichtung (15) von einer Steuereinheit (9) steuerbar ist.

7. Vorrichtung nach einem der vorangehenden Ansprüche, **dadurch gekennzeichnet, dass** die Vorrichtung (1) weiter eine Pumpe (14) für die Überdruckerzeugung in der mindestens einen Baueinheit (7) umfasst.

8. Vorrichtung nach einem der vorangehenden Ansprüche, **dadurch gekennzeichnet, dass** die Drucküberwachungseinrichtung (15) und/oder die Pumpe (14) über eine integrierte Steuerung (9) der Vorrichtung (1) steuerbar und/oder regelbar sind.

9. Vorrichtung nach einem der vorangehenden Ansprüche, **dadurch gekennzeichnet, dass** die Drucküberwachungsvorrichtung (15) mit einer Signalisierungseinrichtung (16) verbunden ist.

10. Vorrichtung nach einem der vorangehenden Ansprüche, **dadurch gekennzeichnet, dass** die Vorrichtung (1) eine Vielzahl von Baueinheiten (4, 7, 9) umfasst, die jeweils ein druckhaltend abgedichtetes Gehäuse (10, 11, 12) aufweisen, und dass in jedem der Gehäuse (10, 11, 12) ein Überdruck gegenüber der Gehäuseumgebung erzeugbar und überwachbar ist.

11. Verfahren zum Betrieb einer Vorrichtung (1) zum Verarbeiten und/oder Transportieren von Lebensmittelprodukten (3) mit mindestens einer Baueinheit (7), wobei die mindestens eine Baueinheit (7) ein druckhaltend abgedichtetes Gehäuse (11) aufweist und mit einer Drucküberwachungseinrichtung (15), wobei in dem mindestens einen Gehäuse (11) ein Überdruck gegenüber der Gehäuseumgebung erzeugt und durch die Drucküberwachungseinrichtung (15) überwacht wird,
**dadurch gekennzeichnet, dass** durch den Überdruck die Anlagerung von Verunreinigungen an dem Gehäuse (11) und/oder das Eindringen in dasselbe verhindert werden, und dass bei einem durch die Drucküberwachungseinrichtung (15) festgestellten Druckabfall oder Druckanstieg innerhalb des Gehäuses (11), mindestens eine Ersatzmaßnahme eingeleitet wird.

12. Verfahren nach Anspruch 11, **dadurch gekennzeichnet, dass** der Überdruck zu festlegbaren Zeitintervallen erzeugt wird.

13. Verfahren nach Anspruch 11 oder 12, **dadurch gekennzeichnet, dass** die Druckverhältnisse in dem Gehäuse (11) anhand von festlegbaren Parametern beurteilt werden.

14. Verfahren nach einem der Ansprüche 11 bis 13, **dadurch gekennzeichnet, dass** der Überdruck in dem Gehäuse (11) von einer Pumpe (14) erzeugt wird.

15. Verfahren nach einem der Ansprüche 10 bis 14, **dadurch gekennzeichnet, dass** die Überdruckerzeugung und die Überdrucküberwachung von einer Steuereinheit (9) gesteuert werden.
